(19) **Europäisches Patentamt**

**European Patent Office**

**Office européen des brevets**

(11) **EP 0 859 711 B1**

(12) **EUROPÄISCHE PATENTSCHRIFT**

(45) Veröffentlichungstag und Bekanntmachung des Hinweises auf die Patenterteilung:
**21.07.1999 Patentblatt 1999/29**

(21) Anmeldenummer: **96938086.4**

(22) Anmeldetag: **05.11.1996**

(51) Int. Cl.$^6$: **B60S 1/36**

(86) Internationale Anmeldenummer:
**PCT/EP96/04815**

(87) Internationale Veröffentlichungsnummer:
**WO 97/17238 (15.05.1997 Gazette 1997/21)**

(54) **SCHEIBENWISCHER UND VERFAHREN ZUR STEUERUNG EINES SCHEIBENWISCHERS**

WINDSCREEN WIPER AND METHOD OF CONTROLLING THE SAME

ESSUIE-GLACE ET PROCEDE DE COMMANDE D'UN ESSUIE-GLACE

(84) Benannte Vertragsstaaten:
**AT BE CH DE DK ES FI FR GB IE IT LI NL PT SE**

(30) Priorität: **07.11.1995 DE 19541437**
**26.04.1996 DE 19616808**

(43) Veröffentlichungstag der Anmeldung:
**26.08.1998 Patentblatt 1998/35**

(73) Patentinhaber:
**Krupp Presta Aktiengesellschaft**
**9492 Eschen (LI)**

(72) Erfinder:
• **PFIFFNER, Guido**
**CH-8887 Mels (CH)**

• **KRÄTTLI, Christian**
**CH-7204 Untervaz (CH)**
• **GRAF, Martin**
**CH-9479 Oberschaan (CH)**

(74) Vertreter:
**Torggler, Paul Norbert et al**
**Patentanwälte Torggler & Hofinger**
**Wilhelm-Greil-Strasse 16**
**Postfach 556**
**6021 Innsbruck (AT)**

(56) Entgegenhaltungen:
| | |
|---|---|
| EP-A- 0 223 390 | WO-A-90/11209 |
| WO-A-93/18944 | DE-A- 2 656 191 |
| US-A- 5 301 383 | US-A- 5 355 061 |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Scheibenwischer, insbesondere für Personenkraftwagen, mit einem einen Schwenkantrieb aufweisenden Wischerarm, der einen ersten um eine fahrzeugfeste Lagerachse schwenkbar gelagerten Wischerarmteil und einen im ersten Wischerarmteil längsverschiebbar geführten, zweiten Wischerarmteil aufweist, an dessen freiem Ende ein Wischerblatt angeordnet ist, das einen vom Schwenkantrieb des Wischerarmes derart abgeleiteten Drehantrieb aufweist, daß sich das Wischerblatt während der Verschwenkung des Wischerarmes im wesentlichen vollflächig zwischen den Scheibenseitenrändern bewegt, wobei der Schwenkantrieb für den Wischerarm einen Motor aufweist.

Ein derartiger Scheibenwischer ist beispielsweise der WO-A 90/11209 zu entnehmen. Der Wischerantrieb umfaßt dort einen üblichen Motor, einen Kurbeltrieb und ein einen Seilzug aufweisendes Zwischengetriebe, das die Schwenkbewegung des Wischerarmes in die Verschiebebewegung des zweiten Wischerarmteiles und die Drehbewegung des Wischerblattes übersetzt. Da die Längenänderung des Wischerarmes nicht linear, sondern in einer umgekehrten Kosinusfunktion vom Schwenkwinkel abhängt, und während jedes Schwenkzyklusses zwei Verschiebezyklen stattfinden müssen, ist das Zwischengetriebe verhältnismäßig aufwendig.

Längenänderungen mittels eines zweiten Motors für Scheibenwischer ohne Wischblattdrehung sind aus der EP-A 223 390 oder der US-A 5 301 383 bekannt.

Die Erfindung betrifft weiters auch ein Verfahren zur Steuerung eines Scheibenwischers derart, daß das Wischerblatt die Scheibe annähernd vollflächig vom Seitenrand zu Seitenrand überstreicht, insbesondere für die Front- oder Heckscheibe von Personenkraftwagen, wobei ein schwenkbar angeordneter erster Wischerarmteil von einem Schwenkantriebsmotor hin- und herverschwenkt und ein zweiter Wischerarmteil im ersten Wischerarmteil längsverschoben wird, und wobei am freien Ende des zweiten Wischerarmteiles ein drehbar gelagertes Wischerblatt relativ zum schwenkenden Wischerarm verdreht wird.

Ein erfindungsgemäßer Scheibenwischer ist nun dadurch einfacher steuerbar und besonders platzsparend konstruiert, daß der Verschiebeantrieb für den zweiten Wischerarmteil einen zweiten Motor aufweist, der im ersten Wischerarmteil angeordnet ist.

In einfacher Weise kann dadurch auch die Steuerung des Scheibenwischers an alle Gegebenheiten angepaßt werden. Durch die Zuordnung eines eigenen, unabhängig vom Schwenkantriebsmotor einsetzbaren Antriebsmotors ist die Verschiebung des Wischerarmes in jedem Moment um genau jenes Ausmaß möglich, das zur Überstreichung der gewünschten Wischfläche auf der Fahrzeugscheibe erforderlich ist.

Um einen möglichst kompakten, geringen Platz beanspruchende Antriebseinheit zu erzielen, ist in einer bevorzugten Ausführung zumindest der Schwenkantriebsmotor als Scheibenläufermotor ausgebildet. Scheibenläufermotoren haben vor allem den Vorteil einer sehr geringen axialen Erstreckung, sodaß eine im wesentlichen koaxiale Anordnung beider Motoren möglich ist, wenn beide Motoren als Scheibenläufermotore ausgebildet sind. Insbesondere ist dabei der Schwenkantriebsmotor innerhalb und der Verschiebeantriebsmotor außerhalb der Karosserie bzw. Motorhaube angeordnet. Die gewünschte, je nach Scheibenform annähernd geradlinige Bewegung des Wischerblattes ergibt sich durch die Kombination der Schwenk- und Verschiebebewegung.

Vorteilhaft wird eine höhere Drehzahl des Schwenkantriebsmotors, wie dies insbesondere bei einem Scheibenläufermotor der Fall ist, durch eine Untersetzung verringert. Hierfür ist bevorzugt vorgesehen, daß der Schwenkantrieb ein Spannungswellengetriebe enthält, das einen elliptischen Rotor, ein verdrehfest geführtes, flexibles Übertragungselement und ein Abtriebsrad aufweist.

In einer bevorzugten Ausführung greift das flexible Übertragungselement einerseits in einen gehäusefesten, innenverzahnten Ring ein und rollt andererseits im ebenfalls innenverzahnten Abtriebsrad ab, wobei die Zahnzahlen des Abtriebsrades und des Ringes um mindestens eins differieren. Das Übertragungselement weist eine geringere Anzahl von Zähnen als beide innenverzahnte Elemente auf. Die Kombination eines Spannungswellengetriebes mit einem Scheibenläufermotor ergibt eine besonders kompakte Schwenkantriebseinheit, wenn die Läuferscheibe des Schwenkantriebsmotors mit dem Rotor des Spannungswellengetriebe verbunden ist. Weiters ist bevorzugt vorgesehen, daß auf dem Antriebsrad des Spannungswellengetriebes der erste Wischerarmteil angeordnet ist.

Um die Anpreßkraft des Wischerblattes an die Fahrzeugscheibe beeinflussen zu können, ist in einer weiteren bevorzugten Ausführung vorgesehen, daß der erste Wischerarmteil um eine Querachse schwenkbar und zur Fahrzeugscheibe beaufschlagt auf dem Abtriebsrad angeordnet ist.

Die Längsverschiebung des zweiten Wischerarmes erfolgt bevorzugt mittels eines Zugmittels, das im ersten Wischerarmteil vorgesehen und insbesondere ohne Zwischengetriebe über die Abtriebswelle des Verschiebeantriebsmotors zu einer vorderen Umlenkstelle geführt ist, und mit dem der zweite Wischerarmteil verbunden ist.

In einer weiteren durch den zweiten Antriebsmotor für die Längsverschiebung wesentlich vereinfachten Ausführung ist vorgesehen, daß der Wischerarm aus einer etwa mittleren Arbeitsstellung, in der er seine kürzeste Länge aufweist, in eine Parkstellung am unteren Scheibenrand verschwenkt wird, wobei die Position des Wischerblattes zum Wischerarm unverändert bleibt und der zweite Antriebsmotor stillgesetzt ist.

Für die Steuerung der beiden Antriebsmotoren ist in einer ersten Ausführung vorgesehen, daß die Schwenkgeschwindigkeit des Wischerarmes wischwinkelabhängig geregelt wird, wobei die Lage des Wischerarmes mittels zumindest eines Positionssensors erfaßt und die Geschwindigkeit daraus errechnet wird. Diese Ausführung läßt sich konstruktiv am einfachsten verwirklichen, da die Positionssensoren im Bereich des Schwenklagers des Wischerarmes angeordnet werden können. Eine Alternative besteht darin, die Positionssensoren dem von einem Kreisbogen abweichenden Weg des Wischerblattes zuzuordnen. In einer weiteren bevorzugten Ausführung wird auch die Verschiebebewegung des zweiten Wischerarmteiles wischwinkelabhängig geregelt, wobei die Position des zweiten Wischerarmteiles mittels zumindest eines weiteren Positionssensors erfaßt und daraus der Verschiebeweg errechnet wird.

Die Abstimmung der beiden Antriebe erfolgt vorzugsweise mittels eines Mikroprozessors od.dgl., wobei Abweichungen durch eine Regelvorrichtung minimiert werden, über die zumindest einer der beiden Antriebsmotore korrigierend angesteuert wird.

Die Messung des Schwenkwinkels bzw. des Verschiebeweges läßt sich mittels verschiedener Methoden erzielen. Eine erste Ausführung sieht vor, daß der Schwenkwinkel bzw. der Verschiebeweg mittels einer variablen Kapazität erfaßt wird, die als frequenzgangbestimmendes Element eines aktiven Schaltkreises eingesetzt wird, und diese Schwingfrequenz der Regelvorrichtung zugeführt wird. Hiebei ist vorzugsweise vorgesehen, daß die variable Kapazität einen geraden oder gebogenen Maßstab aus einer ersten Anzahl n von nebeneinanderliegenden Kondensatorplattenpaaren und eine Anzahl m nacheinanderliegender, elektrisch verbundener Zellen, wobei $m = 2^n$ ist, sowie eine Meßsonde aus einer zweiten Anzahl n von nebeneinanderliegenden Kondensatorplatten umfaßt, wobei die Meßsonde berührungslos entlang des Maßstabes bewegt wird, und der Spannungsabfall über den Kondensatoren bzw. der Stromfluß durch die Kondensatoren ausgewertet wird.

Eine weitere Ausführung sieht vor, daß der Schwenkwinkel bzw. der Verschiebeweg mittels einer variablen Induktivität erfaßt wird, die als frequenzgangbestimmendes Element eines aktiven Schaltkreises eingesetzt wird, und diese Schwingfrequenz der Regelvorrichtung zugeführt wird.

In einer dritten Ausführung kann der Schwenkwinkel bzw. der Verschiebeweg durch Messung einer sich verändernden magnetischen Induktion mittels eines analogen Hall- oder Permalloy-Sensors erfaßt und die erzeugte Spannung ausgewertet werden.

Eine vierte bevorzugte Ausführung sieht vor, den Schwenkwinkel bzw. den Verschiebeweg durch Messung des Druckes einer stehenden Schallwelle mittels eines Piezoaktuators/-sensors zu erfassen, wobei die Schwingfrequenz so geregelt wird, daß die Stehwelle immer zumindest eine volle Wellenlänge aufweist.

Für die Messung des Schwenkwinkels und des Verschiebeweges lassen sich neben diesen vier angeführten Methoden auch noch weitere einsetzen, beispielsweise potentiometrische oder optoelektronische.

Nachstehend werden Ausführungsbeispiele der Erfindung an Hand der Figuren der beiliegenden Zeichnungen näher beschrieben, ohne darauf beschränkt zu sein.

Es zeigen:

Fig. 1 eine schematische Darstellung einer Fahrzeugscheibe mit Scheibenwischer,
Fig. 2 eine schematische Seitenansicht des Antriebs- und Steuerungsteiles des Scheibenwischers,
Fig. 3 ein Schaltungsdiagramm einer ersten Ausführung,
Fig. 4 ein schematisches Detail der Ausführung nach Fig. 3,
Fig. 5 ein Schaltungsdiagramm einer zweiten Ausführung,
Fig. 6 ein Schaltungsdiagramm einer dritten Ausführung,
Fig. 7 ein Schaltungsdiagramm einer vierten Ausführung,
Fig. 8 und 9 schematisch alternative Details der Ausführung nach Fig. 7,
Fig. 10 eine Schrägansicht des Antriebsbereiches einer Scheibenwischeranlage nach Fig. 2 und
Fig. 11 einen Axialschnitt durch den Antriebsbereich nach Fig. 10.

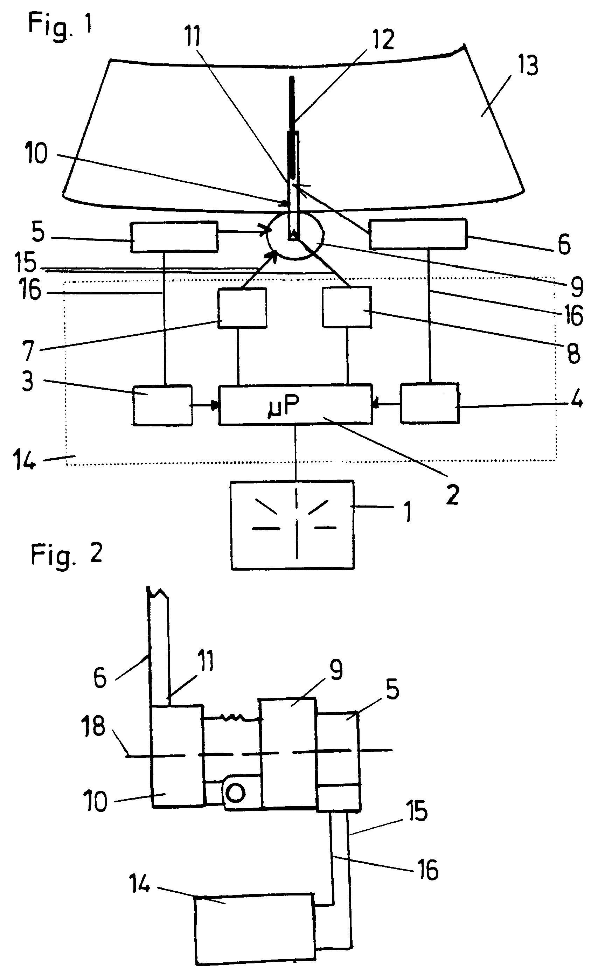

Eine Scheibenwischeranlage weist gemäß Fig. 1 einen einzigen, einer Fahrzeugscheibe 13 zugeordneten Scheibenwischer auf, der sich aus einer um die Schwenkachse 18 hin- und herschwenkbaren ersten Wischerarmteil 11 und einen im ersten Wischerarmteil 11 verschiebbaren zweiten Wischerarmteil 12 zusammensetzt, an dem drehbar ein Wischerblatt angeordnet ist. Die Verschiebung des zweiten Wischerarmteiles 12 und die Verdrehung des Wischerblattes erfolgen dabei so, daß der Scheibenwischer ein im wesentlichen der Form der Fahrzeugscheibe 13 entsprechendes Wischfeld überstreicht. Die beiden beweglichen Wischerarmteile 11,12 werden hiefür von zwei getrennt schaltbaren Antriebsmotoren 9,10 angetrieben, deren Koordinierung durch eine einen Mikroprozessor 2 od.dgl. enthaltende Steuerung 14 erfolgt. Wie Fig. 2 schematisch zeigt, ist dem Schwenkmotor 9 ein Schwenkpositionssensor 5 zugeordnet, und der erste um die Achse 18 schwenkende Wischerarmteil 11 ist mit einem Verschiebemotor 10 versehen, dem ein Verschiebepositionssensor 6 zugeordnet ist. Die Steuerung 14 ist mit den Motoren 9,10 über die Leitungen 15 und mit den Sensoren 5,6 über die Leitungen 16 verbunden. Die Steuerung 14 umfaßt weiters Auswertschaltungen 3,4, die die von den Sensoren 5,6 kommenden Signale umsetzen und an den Mikroprozessor 2 weiterleiten, von dem dann über die Leistungsteile 7,8 die Motoren 9,10 angesteuert werden. Ein üblicher Scheibenwischerstufen- und -intervallschalter 1 ist am Armaturenbrett vorgesehen, über den die Wischergeschwindigkeit vorgegeben werden kann.

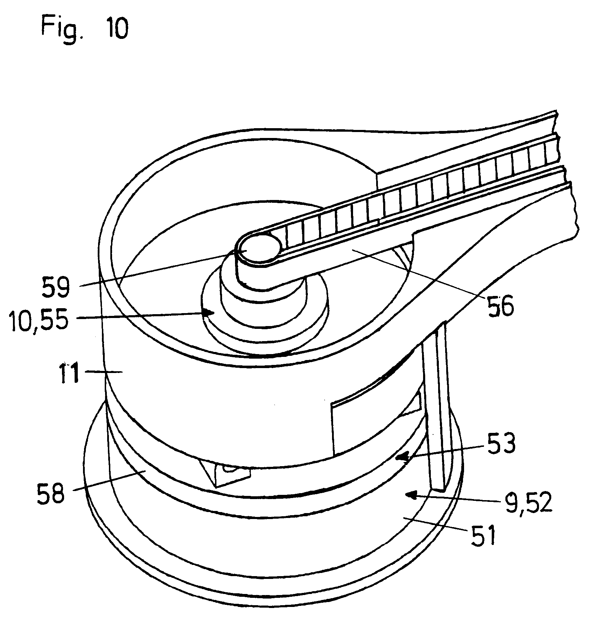

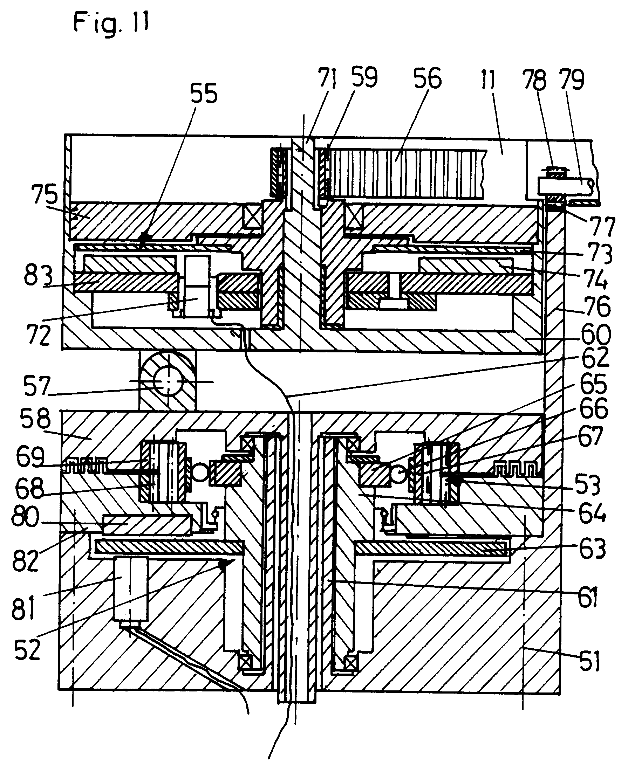

Die Fig. 10 und 11 zeigen Details des Antriebsbereiches, wobei der Scheibenwischer eine karosseriefest montierbare Grundplatte 51 aufweist, von der eine hohle Lagerachse 61 hochsteht. Die Grundplatte 51 trägt als Schwenkantriebsmotor einen ersten Scheibenläufermotor 52, dessen Abtriebswelle 64 auf der Lagerachse 61 drehbar gelagert ist. Auf der Abtriebswelle 64 ist die Läuferscheibe 63 des Motors 52 vorgesehen, der in der Grundplatte 51 angeordnete Bürsten 81 und an einer Deckplatte 82 angeordnete Magnete 80 zugeordnet sind. Auf der Abtriebswelle 64 ist unmittelbar anschließend ein elliptischer Rotor 65 eines Spannungswellengetriebes 53 fixiert, der über einen Lagerring 66 einen flexiblen, außenverzahnten Übertragungsring 67 antreibt. Der Übertragungsring 67 greift in einen, an der Deckplatte 82 karosseriefest fixierten, innenverzahnten Ring 68 und in einen innenverzahnten Ring 69 einer Abtriebsscheibe bzw. eines Abtriebsrades 58 ein, das ebenfalls in der Lagerachse 61 gelagert ist. Die beiden Innenverzahnungen der Ringe 68, 69 unterscheiden sich um mindestens einen Zahn, und der flexible Übertragungsring 67, der einen nochmals geringere Anzahl von Außenzähnen aufweist, greift bei Drehung des Rotors 65 in den Ring 68 ein und verdreht dabei den Ring 69. Dank der elliptischen Ausführung des Rotors sind zwei um 180° versetzte Eingriffsbereiche gegeben. Der Schwenkwinkelsensor 5 kann beispielsweise unterhalb der Grundplatte 51 an dem durch die Lagerachse 61 geführten, und nach unten vorstehenden Lagerzapfen des Abtriebsrades 58 angeordnet sein.

Auf dem Abtriebsrad 58 ist um eine Querachse 57 begrenzt verschwenkbar eine Gehäuseplatte 60 des ersten Wischerannteils 11 angeordnet. Diese trägt den ebenfalls als Scheibenläufermotor 55 ausgebildeten zweiten Motor 10 für den Verschiebeantrieb des zweiten Wischeranteils 12. Von der mit dem Abtriebsrad 58 mitschwenkenden Gehäuseplatte 60 steht eine Lagerachse 71 hoch und trägt den zweiten Scheibenläufermotor 55, dessen Abtriebswelle 59 auf der Lagerachse 71 drehbar gelagert ist. Auf der Abtriebswelle 59 ist die Läuferscheibe 73 des zweiten Motors 55 vorgesehen, der an der Gehäuseplatte 60 bzw. einer Einlagescheibe 83 angeordnete Bürsten 72 und Magnete 74 zugeordnet sind. Die Ansteuerung des zweiten Motors 55 erfolgt über die Leitung 15, die durch die hohle Lagerachse 61 des ersten Scheibenläufermotors 52 von der Steuerung 14 zugeführt wird, die beispielsweise an der Unterseite der Grundplatte 51 angeordnet ist. Um die Abtriebswelle 59 des zweiten Motors 55 verläuft ein Zugelement 56, beispielsweise der gezeigte, endlose Zahnriemen, zu einem Umlenkrad am vorderen Ende des ersten Wischerarmteils 11. Mit dem Zugelement 56 ist an einer Stelle ein Mitnehmer des im ersten Wischerannteil 11 längsverschiebbaren zweiten Wischerarmteiles 12 verbunden, an dessem freien Ende das Wischerblatt drehbar gelagert ist.

Der Drehantrieb des Wischerblattes erfolgt beispielsweise durch eine teleskopische Welle 79, die am inneren Ende ein Ritzel 28 eines Kronenradgetriebes trägt, das sich in einer Verzahnung 77 abwälzt, die an einem auch der Grundplatte 51 verbundenen, karosseriefesten Element 76 ausgebildet ist. Dadurch wird die Relativbewegung zwischen dem schwenkenden Wischerann und der Grundplatte 51 über die Welle 79 nach vorne zum Wischerblatt übertragen, das sich dadurch relativ zum Wischerarm verdreht und eine annähernd parallele Lage zu den beiden Seitenrändern der Scheibe beibehält.

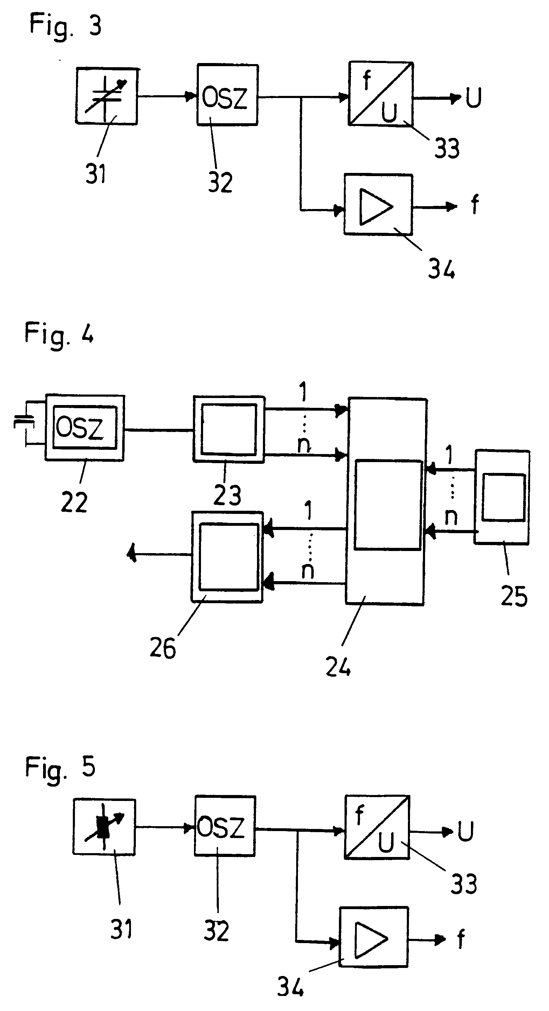

Um nun bei der Regelung der Schwenk- und/oder Verschiebebewegung jederzeit über je einen absoluten Meßwert für den Drehwinkel und die Auszuglänge verfügen zu können, lassen sich verschiedene Erfassungsmethoden und Meßprinzipien verwirklichen. In Fig. 3 ist das Schaltungsdiagramm einer ersten Ausführung mit einem kapazitiven Meßprinzip dargestellt. Als frequenzgangbestimmendes Element 31 eines Schwingkreises 32 wird in dieser Ausführung eine veränderbare Kapazität eingesetzt. Die Schwingfrequenz wird wahlweise durch einen Frequenz-Spannungs-Wandler 33 oder direkt über einen Verstärker 34 einer Regelvorrichtung zugeführt, die mit Hilfe des Mikroprozessors 2 über die Leistungsteile 7,8 die Motoren 9,10 ansteuert, um Geschwindigkeits- und/oder Positionsabweichungen zu korrigieren. Die veränderbare Kapazität kann, wie Fig. 4 zeigt, durch einen kapazitiven Maßstab 24 und eine längs des Maßstabes 24 berührungslos geführte kapazitive Meßsonde 25 gebildet sein. Der Maßstab 24 erstreckt sich längs der Meßstrecke im Wischergehäuse, die als Kreissegment für die Wischwinkelerfassung und im schwenkbaren Wischeramteil als Linearelement für die Erfassung der Verschiebebewegung ausgebildet ist. Der Maßstab 24 besteht aus einer Anzahl n nebeneinandertiegender Kondensatorplattenpaaren, die Zeilen bilden, und einer Anzahl m nebeneinanderliegender gegenseitig elektrisch verbundener Zellen, die Kolonnen bilden, wobei $m = 2^n$ ist. Die Anordnung der Plattenpaare ist so gewährt, daß sich ein einschrittiger, binärer Code, z.B. Gray-Code, ergibt. Das Vorbeiführen der kapazitiven Meßsonde 25, der am verschiebbaren Wischerarmteil 12 angeordnet ist, bewirkt eine schrittweise Änderung der Kapazität, wobei die wegabhängigen Codes durch Anregung aller Codespuren durch den Schwingkreis 22 und die Erregerschaltung 23, sowie Auswertung des Spannungsabfalles an den Kondensatoren bzw. des Stromflusses durch die Kondensatoren mittels einer Gleichrichter-Pegeldetektorschaltung 26 erfaßt werden. Die so erfaßte Weginformation kann wahlweise als digitaler, n-bit paralleler oder n-bit serieller Datensatz oder als Spannungs- oder Stromsignal der Regelvorrichtung zur Weiterverarbeitung zugeführt werden.

Fig. 5 zeigt ein Schaltdiagramm einer zweiten Ausführung, das sich vom Schaltdiagramm der Fig. 3 durch die Art des frequenzgangbestimmenden Elementes 31 für den Schwingkreis 32 unterscheidet, das in dieser Ausführung durch eine variable Induktivität gebildet wird. Die durch beispielsweise eine Spule gebildete Induktivität wird durch die wirksame Spulenfläche oder -länge, die Anzahl der Windungen oder Variation der wirksamen Permeabilität verändert. Die Schwingfrequenz des Schwingkreises 32 wird auch in dieser Ausführung entweder direkt über einen Verstärker 34 oder über einen Frequenz-Spannungs-Wandler 33 der Regelvorrichtung zugeführt, die die Antriebsmotoren 9,10 ansteuert.

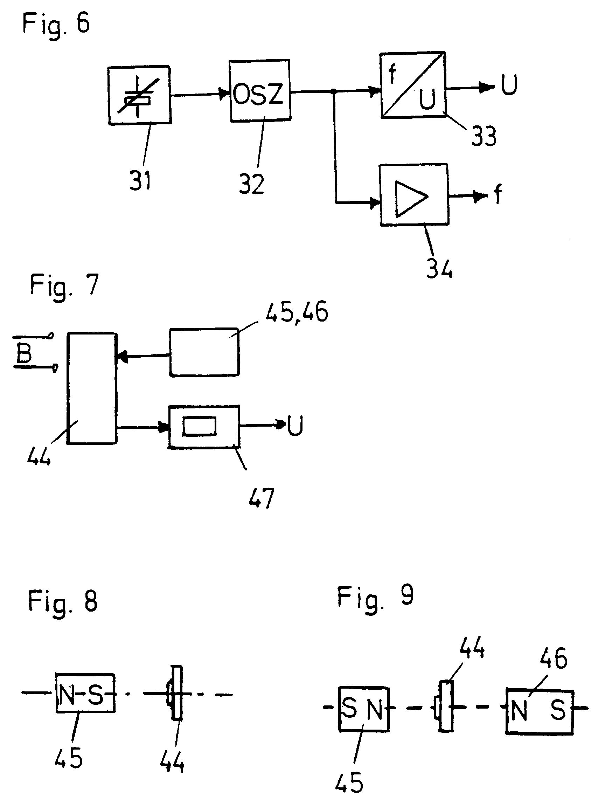

Auch nach Fig. 6 wird ein gleichartiges Meßprinzip eingesetzt, wobei hier das frequenzbestimmende Element 31 für den Schwingkreis 32 durch eine Piezoaktuator/-sensor-Anordnung gebildet ist. Die Schwingfrequenz wird dabei so geregelt, daß der Abstand zwischen dem Piezoaktuator/-sensor und dem zu messenden Objekt, also dem schwenkenden ersten Wischerarmteil 11 oder dem verschiebbaren zweiten Wischerarmteil 12 jeweils vollen Wellenlängen entspricht. Die Frequenz der Stehwelle ist dadurch proportional der Schwenk- bzw. Verschiebebewegung. Auch hier wurden die Signale über einen Frequenz-Spannungs-Wandler 33 oder direkt über einen Verstärker 34 der Regelvorrichtung zugeführt.

Eine weitere Ausführung zeigt Fig. 7. Hier wird ein Hall- oder Permalloy-Sensor 44 eingesetzt, mit Hilfe dessen eine Änderung der magnetischen Induktion erfaßt wird, wenn längs der kreisbogenförmigen oder linearen Meßstrecke ein Elektro- oder Permanentmagnet relativ zum Sensor 44 bewegt wird. Dies kann wie Fig. 8 und 9 zeigen, durch eine einseitige oder auch zweiseitige Annäherung des Magneten 45,46 an den Sensor 44 erfolgen. Wenn dieser durch einen analogen Hall-Sensor gebildet ist, so wird die Änderung der magnetischen Induktion durch Ausnützung der Lorentz-Kraft erfaßt. Wird der Sensor 44 durch einen Permalloy-Sensor gebildet, so beruht die Messung auf Änderung der magnetischen Induktion durch Ausnützung der magnetischen Empfindlichkeit spezieller Eisen-Nickel-Legierungen, beispielsweise Neodymlegierungen. In beiden Fällen wird die vom Sensor 44 erzeugte Spannung durch eine Auswertvorrichtung 47 gefiltert, kalibriert, und schließlich der Regelvorrichtung zugeführt

## Patentansprüche

1.   Scheibenwischer, insbesondere für Personenkraftwagen, mit einem einen Schwenkantrieb aufweisenden Wischerarm, der einen ersten um eine fahrzeugfeste Lagerachse (61) schwenkbar gelagerten Wischerarmteil (11) und einen im ersten Wischerarmteil (11) längsverschiebbar geführten, zweiten Wischerarmteil (12) aufweist, an dessen freiem Ende ein Wischerblatt angeordnet ist, das einen vom Schwenkantrieb des Wischerarmes derart abgeleiteten Drehantrieb aufweist, daß sich das Wischerblatt während der Verschwenkung des Wischerarmes im wesentlichen vollflächig zwischen den Scheibenseitenrändern bewegt, wobei der Schwenkantrieb für den Wischerarm einen Motor (9) aufweist, dadurch gekennzeichnet, daß der Verschiebeantrieb für den zweiten Wischerarmteil (12) einen zweiten Motor (10) aufweist, der im ersten Wischerarmteil (11) angeordnet ist.

2.   Scheibenwischer nach Anspruch 1, dadurch gekennzeichnet, daß zumindest der Schwenkantriebsmotor (9) als Scheibenläufermotor (52) ausgebildet ist.

3.   Scheibenwischer nach Anspruch 1, oder 2, dadurch gekennzeichnet, daß der Schwenkantrieb ein Spannungswellengetriebe (53) enthält, das in koaxialer Anordnung einen elliptischen Rotor (65), ein verdrehfest geführtes flexibles Übertragungselement (67) und ein Abtriebsrad (58) aufweist.

4.   Scheibenwischer nach Anspruch 2 und 3, dadurch gekennzeichnet, daß die Läuferscheibe (63) des Schwenkantriebsmotors (9,52) mit dem Rotor (65) des Spannungswellengetriebe (53) verbunden ist.

5.   Scheibenwischer nach Anspruch 3 oder 4, dadurch gekennzeichnet, daß auf dem Abtriebsrad (58) des Spannungswellengetriebes (53) der erste Wischerarmteil (11) angeordnet ist.

6.   Scheibenwischer nach Anspruch 5, dadurch gekennzeichnet, daß der erste Wischerarmteil (11) um eine Querachse (57) schwenkbar auf dem Abtriebsrad (58) angeordnet ist.

7.   Scheibenwischer nach Anspruch 1, dadurch gekennzeichnet, daß die Abtriebswelle (59) des Verschiebeantriebsmotors (10,55) ein im ersten Wischerarmteil (11) geführtes Zugmittel (56) antreibt, mit dem der zweite Wischerarmteil verbunden ist.

8.   Scheibenwischer nach Anspruch 7, dadurch gekennzeichnet, daß das Zugmittel (56) als Zahnriemen ausgebildet ist.

9.   Scheibenwischer nach einem der Ansprüche 1 bis 8, dadurch gekennzeichnet, daß die fahrzeugfeste Lagerachse (61) hohl ausgebildet ist, und die elektrische Zuleitung (62) zum Verschiebeantriebsmotor (10,55) durch die hohle Lagerachse (61) geführt ist.

10. Verfahren zur Steuerung eines Scheibenwischers derart, daß das Wischerblatt die Scheibe (13) annähernd vollflächig von Seitenrand zu Seitenrand überstreicht, insbesondere für die Front- oder Heckscheibe von Personenkraftwagen, wobei ein schwenkbar angeordneter erster Wischerarmteil (11) von einem Schwenkantriebsmotor (9) hin- und herverschwenkt und ein zweiter Wischerarmteil (12) im ersten Wischerarmteil (11) längsverschoben wird, und wobei am freien Ende des zweiten Wischerarmteiles (12) ein drehbar gelagertes Wischerblatt relativ zum schwenkenden Wischerarm verdreht wird, dadurch gekennzeichnet, daß der zweite Wischerarmteil (12) mittels eines im ersten Wischerarmteil (11) angeordneten zweiten Antriebsmotors (10) verschoben wird.

11. Verfahren nach Anspruch 10, dadurch gekennzeichnet, daß der Wischerarm aus einer etwa mittleren Arbeitsstellung, in der er seine kürzeste Länge aufweist, in eine Parkstellung am unteren Scheibenrand verschwenkt wird, wobei die Position des Wischerblattes zum Wischerarm unverändert bleibt und der zweite Antriebsmotor (10) stillgesetzt ist.

12. Verfahren nach Anspruch 10 oder 11, dadurch gekennzeichnet, daß die Schwenkgeschwindigkeit des Wischerarmes wischwinkelabhängig geregelt wird, wobei die Lage des Wischerarmes mittels zumindest eines Positionssensors (5, 6) erfaßt und die Geschwindigkeit daraus errechnet wird.

13. Verfahren nach einem der Ansprüche 10 bis 12, dadurch gekennzeichnet, daß die Verschiebebewegung des zweiten Wischerarmteiles (11) wischwinkelabhängig geregelt wird, wobei die Position des zweiten Wischerarmteiles (11) mittels zumindest eines Positionssensors (5, 6) erfaßt und daraus der Verschiebeweg errechnet wird.

14. Verfahren nach Anspruch 12 oder 13, dadurch gekennzeichnet, daß Abweichungen durch eine Regelvorrichtung minimiert werden, über die zumindest einer der beiden Antriebsmotoren (9, 10) korrigierend angesteuert wird.

15. Verfahren nach Anspruch 12 oder 13, dadurch gekennzeichnet, daß der Schwenkwinkel bzw. der Veschiebeweg mittels einer variablen Kapazität erfaßt wird, die als frequenzgangbestimmendes Element (31) eines aktiven Schwingkreises (32) eingesetzt wird, und diese Schwingfrequenz der Regelvorrichtung zugeführt wird.

16. Verfahren nach Anspruch 15, dadurch gekennzeichnet, daß die variable Kapazität einen geraden oder gebogenen Maßstab (24) aus einer Anzahl n von nebeneinanderliegenden Kondensatorplattenpaaren und eine Anzahl m nacheinanderliegender, elektrisch verbundener Zellen, wobei $m = 2^n$, sowie eine Meßsonde (25) aus einer zweiten Anzahl n von nebeneinanderliegenden Kondensatorplatten umfaßt, wobei die Meßsonde (25) berührungslos entlang des Maßstabes (24) bewegt wird, und der Spannungsabfall über den Kondensatoren bzw. der Stromfluß durch die Kondensatoren ausgewertet wird.

17. Verfahren nach Anspruch 12 oder 13, dadurch gekennzeichnet, daß der Schwenkwinkel bzw. der Verschiebeweg mittels einer variablen Induktivität erfaßt wird, die als frequenzgangbestimmendes Element (31) eines aktiven Schwingkreises (32) eingesetzt wird, und diese Schwingfrequenz der Regelvorrichtung zugeführt wird.

18. Verfahren nach Anspruch 12 oder 13, dadurch gekennzeichnet, daß der Schwenkwinkel bzw. der Verschiebeweg durch Messung einer sich verändernden magnetischen Induktion mittels eines analogen Hall- oder Permalloysensors (44) erfaßt und die erzeugte Spannung ausgewertet wird.

19. Verfahren nach Anspruch 12 oder 13, dadurch gekennzeichnet, daß der Schwenkwinkel bzw. der Verschiebeweg durch Messung des Druckes einer stehenden Schallwelle mittels eines Piezoaktuators / -sensors erfaßt wird, wobei die Schwingfrequenz so geregelt wird, daß die Stehwelle immer volle Wellenlänge aufweist.

## Claims

1. Window wiper, in particular for automobiles, with a wiper arm having a pivot drive, which wiper arm has a first wiper arm component (11) mounted so as to be capable of pivoting about a mounting shaft (61), which is fixed in the vehicle, and a second wiper arm component (12), which is guided in the first wiper arm component (11) in a longitudinally displaceable fashion and on whose free end a wiper blade is arranged which has a rotary drive derived from the pivot drive of the wiper arm in such a way that during the pivoting of the wiper arm the wiper blade moves essentially over the entire surface between the lateral window edges, the pivot drive for the wiper arm having a motor (9), characterised in that the displacement drive for the second wiper arm component (12) has a second motor (10) which is arranged in the first wiper arm component (11).

2. Window wiper according to claim 1, characterised in that at least the pivot drive motor (9) is constructed as a disk rotor motor (52).

3. Window wiper according to claim 1 or 2, characterised in that the pivot drive contains a stressed shaft gear mechanism (53) which has, in coaxial arrangement, an elliptic rotor (65), a flexible transmission element (67) guided to be fixed in terms of rotation, and an output wheel (58).

4. Window wiper according to claims 2 and 3, characterised in that the rotor disk (63) of the pivot drive motor (9, 52) is connected to the rotor (65) of the stressed shaft gear mechanism (53).

5. Window wiper according to claim 3 or 4, characterised in that the first wiper arm component (11) is arranged on the output wheel (58) of the stressed shaft gear mechanism (53).

6. Window wiper according to claim 5, characterised in that the first wiper arm component (11) is arranged on the output wheel (58) so as to be capable of pivoting about a transverse axis (57).

7. Window wiper according to claim 1, characterised in that the output shaft (59) of the displacement drive motor (10, 55) drives a pulling means (56) which is guided in the first wiper arm component (11) and to which the second wiper arm component is connected.

8. Window wiper according to claim 7, characterised in that the pulling means (56) is constructed as a toothed belt.

9. Window wiper according to one of claims 1 to 8, characterised in that the mounting shaft (61), which is fixed in the vehicle, is of hollow construction, and the electric supply lead (62) to the displacement drive motor (10, 55) is guided through the hollow mounting shaft (61).

10. Method for controlling a window wiper in such a way that the wiper blade sweeps over approximately the entire surface of the window (13) from lateral edge to lateral edge, in particular for the front window or rear window of automobiles, a pivotably arranged first wiper arm component (11) being pivoted to and fro by a pivot drive motor (9), and a second wiper arm component (12) being longitudinally displaced in the first wiper arm component (11), and a rotatably mounted wiper blade being rotated relative to the pivoting wiper arm on the free end of the second wiper arm component (12), characterised in that the second wiper arm component (12) is displaced by means of a second drive motor (10) arranged in the first wiper arm component (11).

11. Method according to claim 10, characterised in that the wiper arm is pivoted from an operating position approximately in the middle, in which its length is shortest, into a parking position at the lower edge of the window, the position of the wiper blade remaining unchanged relative to the wiper arm, and the second drive motor (10) being shut down.

12. Method according to claim 10 or 11, characterised in that the pivoting rate of the wiper arm is controlled as a function of the wiping angle, the position of the wiper arm being detected by means of at least one position sensor (5, 6) and the rate being calculated therefrom.

13. Method according to one of claims 10 to 12, characterised in that the displacement movement of the second wiper arm component (11) is controlled as a function of the wiping angle, the position of the second wiper arm component (11) being detected by means of at least one position sensor (5, 6) and the displacement path being calculated therefrom.

14. Method according to claim 12 or 13, characterised in that deviations are minimised by a control device via which at least one of the two drive motors (9, 10) is driven in a correcting fashion.

15. Method according to claim 12 or 13, characterised in that the pivoting angle or the displacement path is detected by means of a variable capacitor which is used as an element (31), which determines the frequency response, of an active resonant circuit (32), and this oscillation frequency is fed to the control device.

16. Method according to claim 15, characterised in that the variable capacitor comprises a straight or bent scale (24) composed of a number n of juxtaposed pairs of capacitor plates and a number m of consecutive, electrically connected cells, where $m = 2^n$, as well as a measuring probe (25) composed of a second number n of juxtaposed capacitor plates, the measuring probe (25) being moved in a contactless fashion along the scale (24), and the voltage drop across the capacitors or the flow of current through the capacitors being evaluated.

17. Method according to claim 12 or 13, characterised in that the pivoting angle or the displacement path is detected by means of a variable inductor which is used as an element (31), which determines the frequency response, of an active resonant circuit (32), and this oscillation frequency is fed to the control device.

18. Method according to claim 12 or 13, characterised in that the pivoting angle or the displacement path is detected by measuring a varying magnetic induction by means of an analog Hail or Permalloy sensor (44), and the voltage generated is evaluated.

19. Method according to claim 12 or 13, characterised in that the pivoting angle or the displacement path is detected by measuring the pressure of a standing sound wave by means of a piezoelectric actuator/sensor, the oscillation frequency being controlled such that the standing wave always has a full wavelength.

## Revendications

1. Essuie-glace, notamment pour véhicules personnels, muni d'un bras d'essuie-glace présentant un entraînement pivotant, qui présente une première partie de bras d'essuie-glace (11) logée de manière pivotante autour d'un axe de palier (61) fixe par rapport au véhicule et une seconde partie de bras d'essuie-glace (12) guidée de manière à pouvoir être coulissée longitudinalement dans la première partie de bras d'essuie-glace, à l'extrémité libre de laquelle est agencé un balai d'essuie-glace, qui présente un entraînement rotatif dérivé de l'entraînement pivotant du bras d'essuie-glace, de telle sorte que le balai d'essuie-glace se déplace sensiblement sur toute la surface située entre les bords latéraux du pare-brise pendant le pivotement du bras d'essuie-glace, l'entraînement pivotant présentant un moteur (9) destiné au bras d'essuie-glace, caractérisé en ce que l'entraînement par coulissement pour la seconde partie de bras d'essuie-glace (12) présente un second moteur (10), qui est agencé dans la première partie de bras d'essuie-glace (11).

2. Essuie-glace selon la revendication 1, caractérisé en ce qu'au moins le moteur produisant l'entraînement pivotant (9) est construit comme un moteur à induit à disque (52).

3. Essuie-glace selon la revendication 1 ou 2, caractérisé en ce que l'entraînement pivotant comprend une commande à ondes de tension (53), qui présente, selon un agencement coaxial, un rotor elliptique (65), un élément de transmission flexible et résistant aux torsions (67) et une roue d'entraînement (58).

4. Essuie-glace selon la revendication 2 ou 3, caractérisé en ce que le disque d'induit (63) du moteur produisant l'entraînement pivotant (9, 52) est relié au rotor (65) de la commande à ondes de tension (53).

5. Essuie-glace selon la revendication 3 ou 4, caractérisé en ce que sur la roue d'entraînement (58) de la commande à ondes de tension (53) se trouve la première partie de bras d'essuie-glace (11).

6. Essuie-glace selon la revendication 5, caractérisé en ce que la première partie de bras d'essuie-glace (11) est agencée de manière pivotante autour d'un axe transversal (57) sur la roue d'entraînement (58).

7. Essuie-glace selon la revendication 1, caractérisé en ce que l'arbre mené (59) du moteur d'entraînement par coulissement (10, 55) actionne un moyen d'entraînement (56) guidé dans la première partie de bras d'essuie-glace, auquel est reliée la seconde partie de bras d'essuie-glace.

8. Essuie-glace selon la revendication 7, caractérisé en ce que le moyen d'entraînement (56) est conçu comme une courroie dentée.

9. Essuie-glace selon l'une quelconque des revendications 1 à 8, caractérisé en ce que l'axe de palier (61) fixe par rapport au véhicule est construit de manière à être creux, et le câble électrique (62) est guidé par l'axe de palier creux (61) jusqu'au moteur d'entraînement par coulissement (10, 55).

10. Procédé d'actionnement d'un essuie-glace d'un type tel que le balai d'essuie-glace balaye le pare-brise (13) sur presque toute la surface d'un bord à l'autre du pare-brise, en particulier pour les pare-brise et lunette arrière de véhicules personnels, une première partie de bras d'essuie-glace (11), agencée de manière pivotante, pivotant en aller-retour à l'aide d'un moteur produisant l'entraînement pivotant et une seconde partie de bras d'essuie-glace (12) coulissant longitudinalement dans la première partie de bras d'essuie-glace (11), et un balai d'essuie-glace monté de manière rotative à l'extrémité libre de la seconde partie de bras d'essuie-glace (12), tournant par rapport au bras d'essuie-glace pivotant, caractérisé en ce que la seconde partie de bras d'essuie-glace (12) coulisse au moyen d'un second moteur d'entraînement (10) agencé dans la première partie de bras d'essuie-glace (11).

11. Procédé selon la revendication 10, caractérisé en ce que le bras d'essuie-glace pivote d'une position de fonctionnement sensiblement centrale, dans laquelle il présente sa longueur la plus courte, à une position de repos sur le bord inférieur du pare-brise, la position du balai d'essuie-glace restant inchangée par rapport au bras d'essuie-glace et le second moteur d'entraînement (10) étant au repos.

12. Procédé selon la revendication 10 ou 11, caractérisé en ce que la vitesse de pivotement du bras d'essuie-glace est réglée en fonction de l'angle d'essuyage, la position du bras d'essuie-glace étant détectée à l'aide d'au moins un capteur de position (5, 6) et la vitesse en étant ainsi déduite.

13. Procédé selon l'une des revendications 10 à 12, caractérisé en ce que le mouvement de coulissement de la seconde partie de bras d'essuie-glace (12) est réglé en fonction de l'angle d'essuyage, la position de la seconde partie de bras d'essuie-glace (12) étant détectée à l'aide d'au moins un capteur de position (5, 6) et le mouvement de coulissement en étant ainsi déduit.

14. Procédé selon la revendication 12 ou 13, caractérisé en ce que des écarts sont minimisés par un dispositif de réglage, par l'intermédiaire duquel au moins un des deux moteurs d'entraînement (9, 10) est commandé de manière corrective.

15. Procédé selon la revendication 12 ou 13, caractérisé en ce que l'angle de pivotement ou le mouvement de coulissement est détecté à l'aide d'une capacité variable, qui est placée en tant qu'élément déterminant la caractéristique de fréquences (31) d'un circuit oscillant (32) actif et cette fréquence d'oscillations est fournie au dispositif de réglage.

16. Procédé selon la revendication 15, caractérisé en ce que la capacité variable comprend une échelle rectiligne ou courbe (24) constituée d'un nombre n de paires d'armatures de condensateur placées les unes à côté des autres et d'un nombre m de cellules successives reliées électriquement, où $m = 2^n$, et comprend également une sonde de mesure (25) constituée d'un second nombre n d'armatures de condensateur placées les unes à côté des autres, la sonde de mesure (25) se déplaçant sans contact le long de l'échelle (24), et la chute de tension se produisant sur les condensateurs ou le flux de courant électrique est estimée au moyen des condensateurs.

17. Procédé selon la revendication 12 ou 13, caractérisé en ce que l'angle de pivotement ou le mouvement de coulissement est détecté à l'aide d'une inductance variable, qui est introduite comme élément déterminant la caractéristique de fréquences (31) d'un circuit oscillant (32) et cette fréquence d'oscillations est fournie au dispositif de réglage.

18. Procédé selon la revendication 12 ou 13, caractérisé en ce que l'angle de pivotement ou le mouvement de coulissement est évalué en mesurant une induction magnétique variable au moyen d'un capteur Hall ou permalloy (44) analogique et la tension obtenue est évaluée.

19. Procédé selon la revendication 12 ou 13, caractérisé en ce que l'angle de pivotement ou le mouvement de coulissement est détecté en mesurant la pression d'une onde sonore stationnaire au moyen d'un actionneur/détecteur piézoélectrique, la fréquence d'oscillation étant réglée de telle sorte que l'onde stationnaire présente toujours des longueurs d'onde pleines.

Fig. 1

Fig. 2

Fig. 3

Fig. 4

Fig. 5

Fig. 6

```
┌─────┐      ┌─────┐          ┌─────┐
│  ≢  │ ───→ │ OSZ │ ───→  ·──│ f / │ ──→ U
└─────┘      └─────┘      │   │  U  │
   │            │         │   └─────┘
                          │       ╲ 33
   31           32        │
                          │   ┌─────┐
                          └──→│  ▷  │ ──→ f
                              └─────┘
                                  ╲ 34
```

Fig. 7

```
          ┌───────┐         45,46
          │       │       ┌──────┐
 ‾B̄ ○────→│       │←──────│      │
    ○     │       │       └──────┘
          │       │
          │       │──→ ┌────────┐
          └───────┘    │  ▭    │ ──→ U
              ╲        └────────┘
              44            ╲
                            47
```

Fig. 8

```
 ──┤N─S├─·─┤▯├─·─·──
   └─┬─┘    │
     45     44
```

Fig. 9

```
 ──┤S N├─·─┤▯├─·─┤N  S├──
   └─┬─┘    │44   └──┬─┘46
     45              
```

Fig. 10

59

10,55

11

58

56

53

9,52

51

Fig. 11